# EUROPÄISCHE PATENTSCHRIFT

(11) **EP 1 852 582 B1**
(45) Veröffentlichungstag und Bekanntmachung des Hinweises auf die Patenterteilung: **18.06.2008**
(21) Anmeldenummer: 07007277.2
(22) Anmeldetag: 07.04.2007
(51) Int. Cl.: F01N 3/08, F01N 3/20, B01D 53/94

(54) **Mehrzylindrige Brennkraftmaschine mit mehreren Katalysatoren im Abgasstrang**
Multi-cylinder internal combustion engine having several catalysts in the exhaust gas system
Moteur à combustion multicylindre avec plusieurs catalyseurs dans le système d'échappement

(30) Priorität: 05.05.2006 AT 7742006
(43) Veröffentlichungstag der Anmeldung: 07.11.2007
(73) Patentinhaber: MAN Nutzfahrzeuge Österreich AG, 4400 Steyr (AT)
(72) Erfinder: Stiebinger, Christian, 4611 Buchkirchen (AT)

(56) Entgegenhaltungen:
- EP-A- 1 422 410
- DE-A1- 10 020 639
- DE-A1- 10 123 359
- DE-A1- 10 218 255
- DE-A1- 10 322 963
- GB-A- 2 389 918

## Beschreibung

Die Erfindung betrifft eine mehrzylindrige Brennkraftmaschine mit Merkmalen der im Oberbegriff des Anspruchs 1 angegebenen Art.

Die Erfindung geht aus von der DE 103 22 963 A1. Aus den dortigen Figuren 2A und 2C ist eine mehrzylindrige Brennkraftmaschine mit den gattungsgemäßen Merkmalen bekannt. Es ist aber in der Schrift nichts über die Art der Katalysatoren in den einzelnen Abgasteilströmen ausgesagt. Andererseits ist es aus der DE 101 23 359 A1, dort Fig. 21 mit zugehörigem Text bekannt, im Abgasstrang einer Brennkraftmaschine einen Vorschalldämpfer vorzusehen, in dem ein Hydrolysekatalysator und wenigstens ein Oxidationskatalysator parallel durchströmt sind. In den Eintrittsbereich des Hydrolysekatalysators wird ein Reduktionsmittel eingedüst, aus dem Ammoniak gewonnen wird. Der Oxidationskatalysator dient zur Umwandlung von NO in NO₂. Diese Art einer von einem gemeinsamen Abgaseinströmraum im Vorschalldämpfer ausgehenden Paralleldurchströmung beider Katalysatoren kann zu unerwünscht ungleichen Strömungsanteilen führen, was entweder eine zu hohe NO₂-Produktion oder eine nicht vollständige Umwandlung des Reduktionsmittels mit schädlichen Spaltprodukten wie Isocyansäure bzw. Cyanursäure-Festpartikelnzur Folge haben kann.

Es ist daher Aufgabe der Erfindung, eine Brennkraftmaschine der gattungsgemäßen Art so auszugestalten, dass im Abgas sowohl NO in NO₂ umwandelbar als auch durch Eindüsung eines Reduktionsmittels Ammoniak erzeugbar ist, aber jene Nachteile der aus der DE 101 23 359 A1 bekannten Paralleldurchströmung der Katalysatoren, also ungleiche Strömungsanteile in den einzelnen Katalysatoren vermieden werden, das heißt, diese immer mit einem definierten Abgasstrom beaufschlagt werden.

Diese Aufgabe ist bei einer Brennkraftmaschine der gattungsgemäßen Art erfindungsgemäß durch die im Anspruch 1 angegebenen kennzeichnenden Merkmale gelöst.

Vorteilhafte Ausgestaltungen und Weiterbildungen der erfindungsgemäßen Lösung sind in den Unteransprüchen angegeben.

Aufgrund der erfindungsgemäßen Anordnung des Oxidationskatalysators und Hydrolysekatalysators in jeweils einem eigenen Abgasteilstrang Brennkraftmaschine ist jeder dieser Katalysatoren immer mit einem definierten Abgasstrom beaufschlagt. Die Funktionalitäten der beiden Katalysatoren werden aufgrund ihrer getrennten Anordnung nicht gegenseitig beeinflusst, sondern kommen voll zur Wirkung. Das heißt, über den Oxidationskatalysator strömt ein definierter Abgasstrom, in dem das NO in definierter Menge zu NO₂ umgewandelt wird. Dem Hydrolysekatalysator ist eine definierte, durch das Rohr des Abgasteilstrangs gegebene Eindüsstrecke für das Reduktionsmittel zugeordnet. Nach den Katalysatoren werden die beiden dann unterschiedlichen Gasströme zusammengeführt, anschließend im Abgashauptstrang in einer hinreichend langen Mischstrecke innig vermischt und dann durch den bzw. die SCR-Katalysatoren sowie gegebenenfalls weitere Katalysatoren geleitet.

Nachfolgend ist die erfindungsgemäße Lösung anhand zweier in der Zeichnung dargestellter Ausführungsbeispiele noch näher erläutert. In der Zeichnung zeigen:
- Fig. 1: schematisch als mehrzylindrige Brennkraftmaschine einen 6-Zylinder-Reihenmotor und
- Fig. 2: schematisch als mehrzylindrige Brennkraftmaschine einen 8-Zylinder-Reihenmotor, jeweils mit einer erfindungsgemäßen Abgasstrang- und Katalysatoranordnung.

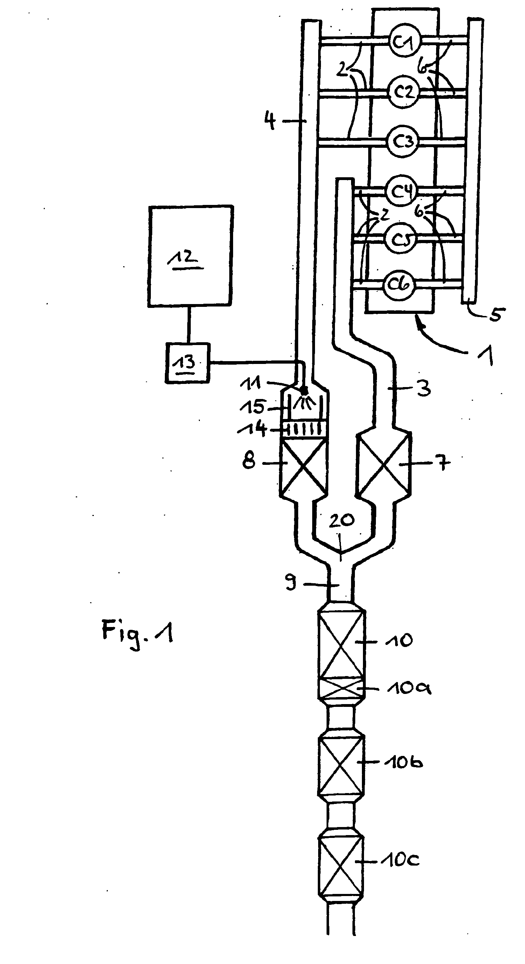

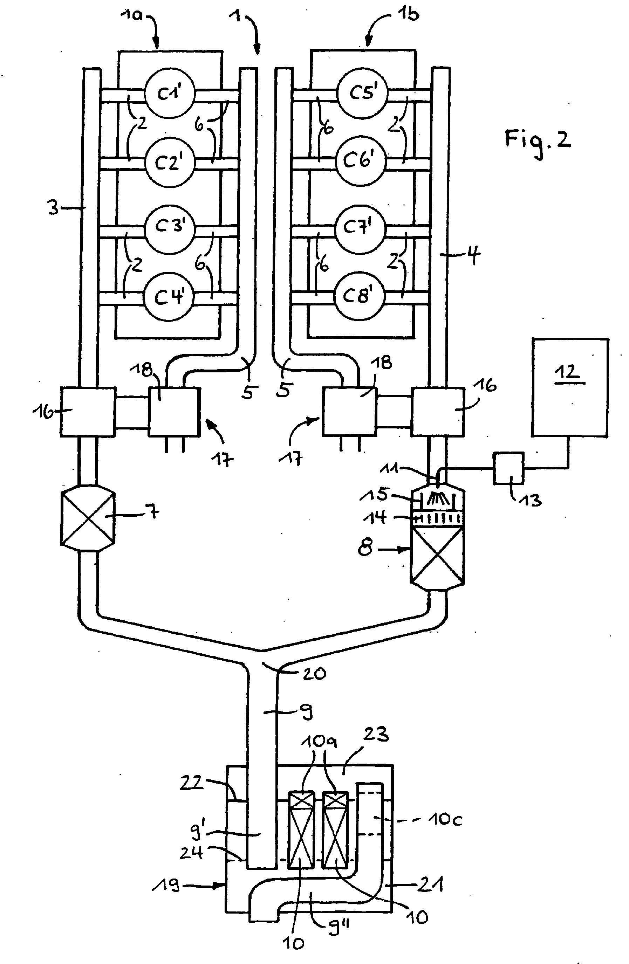

In den Figuren ist mit 1 eine Brennkraftmaschine bezeichnet, die beispielsweise als Antriebsquelle eines Fahrzeugs dient. In Fig. 1 ist diese Brennkraftmaschine 1 ein 6-Zylinder-Reihenmotor, dessen Zylinder mit C1, C2, C3, C4, C5, C6 bezeichnet sind. In Fig. 2 ist die Brennkraftmaschine 1 durch einen 8-Zylinder-V-Motor gebildet, dessen Zylinder mit C1', C2', C3', C4', C5', C6', C7' und C8' und dessen beide Zylinderreihen mit 1a, 1b bezeichnet sind. Die Abgasauslässe der Zylinder sind mit 2 bezeichnet. Bei jeder Brennkraftmaschine 1 sind die Abgasauslässe 2 eines Teils der Zylinder (C1, C2, C3 in Fig. 1; C1', C2', C3', C4' in Fig. 2) an einem ersten Abgasteilstrang 3 und die Abgasauslässe 2 der restlichen Zylinder (C4, C5, C6 in Fig. 1; C5', C6', C7', C8' in Fig. 2) an einem zweiten Abgasteilstrang 4 angeschlossen. Mit 5 ist eine Ausgang- oder Ladeluftleitung bezeichnet, aus der die Zylinder der Brennkraftmaschine 1 über Einlässe 6 mit Verbrennungsluft bzw. Ladeluft versorgbar sind. In jeden der beiden Abgasteilstränge 3, 4 ist ein Katalysator 7 bzw. 8 angeordnet. Strömungsmäßig nach diesen Katalysatoren 7, 8 münden die beiden Abgasteilstränge 3, 4 in einen dann gemeinsamen Abgashauptstrang 9 ein, in dem wenigstens ein weiterer Katalysator 10 angeordnet ist.

Erfindungsgemäß ist der im einen Abgasteilstrang 3 angeordnete Katalysator 7 durch einen Oxidationskatalysator gebildet, mit dem das im durchströmenden Abgas enthaltene Stickstoffmonoxid (NO) in Stickstoffdioxid (NO₂) unwandelbar ist. Des Weiteren ist der im anderen Abgasteilstrang 4 angeordnete Katalysator 8 durch einen Hydrolysekatalysator gebildet und in diesen Abgasteilstrang 4 ist strömungsmäßig vor dem Hydrolysekatalysator 8 ein Reduktionsmittel eindüsbar, und zwar über eine Düse 11, die von einem Vorratsbehälter 12 her über eine Dosiereinrichtung 13 das Reduktionsmittel in erforderlicher Menge zugeführt bekommt. Aus diesem Reduktionsmittel ist unter Zuhilfenahme des Hydrolysekatalysators 8 Ammoniak erzeugbar.

Dem Hydrolysekatalysator 8 kann dann, wenn es sich bei dem Reduktionsmittel um eine Harnstoffwasserlösung handelt, ein Strömungsmischer 14 und gegebenenfalls auch noch ein Verdampfer bzw. eine Heizeinrichtung 15 vorgeschaltet sein. Der Strömungsmischer 14 dient zur innigen Vermischung des eingedüsten Reduktionsmittels mit dem Abgas sowie zur Vergleichmäßigung der Verteilung dieses Gemisches über den ganzen Eintrittsquerschnitt des Hydrolysekatalysators 8. Der Verdampfer bzw. die Heizeinrichtung 15 dienen zur Beschleunigung der Verdampfung des eingedüsten Reduktionsmittels.

Bei dem V-Motor gemäß Fig. 2 führt jeder der Abgasteilstränge 3, 4 strömungsmäßig vor dem jeweiligen Katalysator 7, 8 über die Turbine 16 eines Abgasturboladers 17, durch dessen Verdichter 18 die Ladeluftleitung 5 mit Ladeluft versorgbar ist.

Bei dem wenigstens einen weiteren Katalysator 10 im Abgashauptstrang 9 handelt es sich um einen oder mehrere SCR-Katalysator(en) und gegebenenfalls Ammoniak (NH₃)-Sperroxidationskatalysator(en) 10a, Partikeloxidationskatalysator(en) 10b, sowie Stickstoffdioxid (NO₂)-Sperrkatalysator(en) 10c.

Im Beispiel von Fig. 1 sind diese Katalysatoren 10, 10a, 10b, 10c in Reihe hintereinander im Abgasstrang 9 angeordnet. Im Beispiel gemäß Fig. 2 dagegen ist im Abgashauptstrang 9 ein Schalldämpfer 19 vorgesehen, in den der bzw. die Katalysator(en) 10, 10a, 10b, 10c eingebaut sind.

Jener Abschnitt des Abgashauptstranges 9 zwischen der Vereinigungsstelle 20 der beiden Abgasteilstränge 3, 4 und der Eintrittsstelle in den (ersten der) Katalysator(en) 10 bildet eine hinreichend lange Mischstrecke für die beiden unterschiedlichen, aus den Abgasteilsträngen 3, 4 in den Abgashauptstrang 9 eingeleiteten Gasströme. Im Fall des Beispiels gemäß Fig. 2 ist ein Rohrstück 9' des Abgashauptstranges 9 Teil dieser Mischstrecke, das weit in den Innenraum des Schalldämpfers 19 hinein verlängert ist und in einen hinten gegebenen Einströmraum 21 ausmündet. Der Einströmraum 21 ist im tonnenförmigen Schalldämpfer 19 durch eine Wand 22 von einem vorderen Abströmraum 23 getrennt. Von dieser gasundurchlässigen Wand 22 und einer gasdurchlässigen Haltewand 24 sind parallel durchströmbare Katalysatormodule 10' im Schalldämpfer 19 lagefixiert. Jede dieser Katalysatormodule 10' weist in einem eigenen Gehäuse einen SCR-Katalysator 10 und strömungsmäßig anschließend einen Ammoniaksperrkatalysator 10a auf. Vom Abströmraum 23 führt ein Endrohr 9" aus dem Schalldämpfer 19 heraus, in das im dargestellten Fall ein Stickstoffdioxid (NO₂)-Sperrkatalysator 10c eingebaut ist, gegebenenfalls auch noch ein Partikeloxidationskatalyssator 10b eingebaut sein kann.

## Patentansprüche

1. Mehrzylindrige Brennkraftmaschine, insbesondere eines Nutzfahrzeugs, bei der die Abgasauslässe (2) eines Teils der Zylinder an einem ersten Abgasteilstrang (3) und die Abgasauslässe (2) des anderen Teils der Zylinder an einem zweiten Abgasteilstrang (4) angeschlossen sind, wobei in jedem Abgasteilstrang (3, 4) ein Katalysator (7, 8) angeordnet ist, außerdem beide Abgasteilstränge (3, 4) strömungsmäßig nach den Katalysatoren (7, 8) in einen gemeinsamen Abgashauptstrang (9) einmünden, in dem wenigstens ein weiterer Katalysator (10, 10a, 10b, 10c) angeordnet ist, **dadurch gekennzeichnet, dass** der im einen Abgasteilstrang (3) angeordnete Katalysator (7) ein Oxidationskatalysator ist, mit dem das im durchströmenden Abgas enthaltene Stickstoffmonoxid (NO) zu Stickstoffdioxid (NO₂) umwandelbar ist, dass der im anderen Abgasteilstrang (4) angeordnete Katalysator (8) ein Hydrolysekatalysator ist, und dass in den anderen Abgasteilstrang (4) strömungsmäßig vor dem Hydrolysekatalysator (8) ein Reduktionsmittel eindüsbar ist, aus dem mittels des Hydrolysekatalysators (8) Ammoniak erzeugbar ist.

2. Brennkraftmaschine nach Anspruch 1, **dadurch gekennzeichnet, dass** dem Hydrolysekatalysator (8) im Falle einer Harnstoffwasserlösung als Reduktionsmittel ein Strömungsmischer (14) vorgeschaltet ist.

3. Brennkraftmaschine nach einen der Ansprüche 1 und 2, **dadurch gekennzeichnet, dass** dem Hydrolysekatalysator (8) ein Verdampfer bzw. eine Heizeinrichtung (15) für die Beschleunigung der Reduktionsmittelverdampfung vorgeschaltet ist.

4. Brennkraftmaschine nach Anspruch 1, **dadurch gekennzeichnet, dass** bei einem V-Motor (1) die Abgasauslässe (2) jeder Zylinderreihe (1a,1 b) an einem Abgasteilstrang (3, 4) angeschlossen sind und jeder dieser Abgasteilstränge (3, 4) strömungsmäßig vor dem jeweiligen Katalysator (7, 8) über die Turbine (16) eines Abgasturboladers (17) führt.

5. Brennkraftmaschine nach Anspruch 1, **dadurch gekennzeichnet, dass** der Abschnitt des Abgashauptstrangs (9) zwischen der Vereinigungsstelle (20) der beiden Abgasteilstränge (3, 4) und der Eintrittsstelle in den dortigen (ersten) Katalysator (10) als hinreichend lange Mischstrecke für die beiden unterschiedlichen Gasströme aus dem Abgasteilsträngen (3, 4) ausgebildet ist.

6. Brennkraftmaschine nach Anspruch 1, **dadurch gekennzeichnet, dass** es sich bei dem/den im Abgashauptstrang (9) angeordneten Katalysator(en) (10) um einen oder mehrere SCR-Katalysator(en) und gegebenenfalls Ammoniaksperrkatalysator(en) (10a), Partikeloxidationskatalysator(en) (10b) sowie Stickstoffdioxidsperrkatalysator(en) (10c) handelt.

7. Brennkraftmaschine nach Anspruch 6, **dadurch gekennzeichnet, dass** zumindest der/die SCR-Katalysator(en) (10) in einen im Abgashauptstrang (9) angeordneten Schalldämpfer (19) eingebaut sind.

## Claims

1. Multi-cylinder internal combustion engine, particularly of a commercial vehicle, in which internal combustion engine the exhaust-gas outlets (2) of one group of cylinders are connected to a first exhaust-gas sub-branch (3) and the exhaust-gas outlets (2) of the other group of cylinders are connected to a second exhaust-gas sub-branch (4), whereby each exhaust-gas sub-branch (3, 4) is provided with a catalytic converter (7, 8) and, in addition, both exhaust-gas sub-branches (3, 4) merge, with respect to the direction of flow, into a common exhaust-gas main branch (9) at a point downstream of the catalytic converters (7, 8), in which exhaust-gas main branch (9) at least one further catalytic converter (10, 10a, 10b, 10c) is arranged, **characterised in that** the catalytic converter (7) arranged in the one exhaust-gas sub-branch (3) is an oxidising catalytic converter with which the nitrogen monoxide (NO) contained in the flow of exhaust gases can be converted to nitrogen dioxide (NO₂) that the catalytic converter (8) arranged in the other exhaust-gas sub-branch (4) is a hydrolytic catalytic converter and that, in respect of the direction of flow, a reducing agent can be sprayed into the other exhaust-gas sub-branch (4) upstream of the hydrolytic catalytic converter (8), from which reducing agent ammonia can be generated with the aid of the hydrolytic catalytic converter (8).

2. Internal combustion engine according to Claim 1, **characterised in that** if an aqueous urea solution is used as a reducing agent a flow mixer (14) is arranged upstream of the hydrolytic catalytic converter (8).

3. Internal combustion engine according to one of the Claims 1 and 2, **characterised in that** an evaporator or a heating device (15) for speeding up the evaporation of the reducing agent is fitted upstream of the hydrolytic catalytic converter (8).

4. Internal combustion engine according to Claim 1, **characterised in that** in a V-type engine (1) the exhaust-gas outlets (2) of each cylinder bank (1 a, 1b) are connected to an exhaust-gas sub-branch (3, 4) and that upstream of the respective catalytic converter (7, 8) each of these exhaust-gas sub-branches (3, 4) routes the exhaust gas via the turbine (16) of a turbocharger (17).

5. Internal combustion engine according to Claim 1, **characterised in that** the section of the exhaust-gas main branch (9) between the point (20) where the two exhaust-gas sub-branches (3, 4) merge and the point of entry into the (first) catalytic converter (10) provided there is designed as a sufficiently long mixing portion for the two different gas flows from the exhaust-gas sub-branches (3, 4).

6. Internal combustion engine according to Claim 1, **characterised in that** the catalytic converter(s) (10) arranged in the exhaust-gas main branch (9) is (are) one or several SCR catalytic converter(s) and, if appropriate, ammonia blocking catalytic converter(s) (10a), particulate oxidising catalytic converter(s) (10b) and nitrogen dioxide blocking catalytic converter(s) (10c).

7. Internal combustion engine according to Claim 6, **characterised in that** at least the SCR catalytic converter(s) (10) is (are) installed in a silencer (19) arranged in the exhaust-gas main branch (9).

## Revendications

1. Moteur à combustion interne à plusieurs cylindres, en particulier d'un véhicule industriel, dans lequel les sorties d'échappement (2) d'une partie des cylindres sont reliées à une première ligne d'échappement partielle (3) et les sorties d'échappement (2) de l'autre partie des cylindres sont reliées à une deuxième ligne d'échappement partielle (4), auquel cas un catalyseur (7, 8) est disposé dans chaque ligne d'échappement partielle, de plus les deux lignes d'échappement partielles (3, 4) débouchent dans la direction du flux en aval des catalyseurs (7, 8) dans une ligne d'échappement principale (9) dans laquelle est disposé au moins un autre catalyseur (10, 10a, 10b, 10c), **caractérisé en ce que** le catalyseur (7) disposé dans une ligne d'échappement partielle (3) est un catalyseur à oxydation permettant de transformer le monoxyde d'azote (NO) contenu dans les gaz d'échappement s'écoulant dans le tuyau d'échappement en dioxyde d'azote, **en ce que** le catalyseur (8) disposé dans l'autre ligne d'échappement partielle (4) est catalyseur à hydrolyse et **en ce qu'**un agent réducteur peut être injecté dans l'autre ligne d'échappement partielle (4) s'écoulant en amont du catalyseur à hydrolyse (8) et peut produire de l'ammoniac au moyen du catalyseur à hydrolyse (8).

2. Moteur à combustion interne selon la revendication 1, **caractérisé en ce que** un mélangeur de flux est monté en amont du catalyseur à hydrolyse (8) dans le cas d'une solution à base d'eau et d'urée utilisée comme agent réducteur.

3. Moteur à combustion interne selon l'une des revendications 1 et2, **caractérisé en ce que** un évaporateur ou un dispositif de chauffage (15) destiné à l'accélération de l'évaporation de l'agent réducteur est monté en amont du catalyseur à hydrolyse (8).

4. Moteur à combustion interne selon la revendication 1, **caractérisé en ce que**, dans le cas d'un moteur en V (1), les sorties d'échappement (2) de chaque rangée de cylindres (1a, 1b) sont reliées à une ligne d'échappement partielle (3, 4) et chacune des lignes d'échappement partielles (3, 4) conduit le flux des gaz d'échappement en amont de chaque catalyseur (7, 8) en passant par la turbine (16) d'un turbocompresseur (17).

5. Moteur à combustion interne selon la revendication 1, **caractérisé en ce que** la partie de la ligne d'échappement principale (9) est formée entre l'endroit de jonction (20) des deux lignes d'échappement partielles (3, 4) et l'endroit d'admission dans le (premier) catalyseur (10) placé à cet endroit comme ligne de mélange suffisamment longue pour recevoir les deux flux de gaz d'échappement provenant des lignes d'échappement partielles (3, 4).

6. Moteur à combustion interne selon la revendication 1, **caractérisé en ce que**, dans le cas du/des catalyseur(s) disposé(s) dans la ligne d'échappement principale (9), il s'agit d'un ou de plusieurs catalyseurs SCR et, le cas échéant, de catalyseurs à rétention d'ammoniac (10a), de catalyseurs à oxydation de particules (10b) ainsi que de catalyseurs à rétention de dioxyde d'azote (10c).

7. Moteur à combustion interne selon la revendication 6, **caractérisé en ce qu'**au moins le/les catalyseur(s) est/sont monté(s) dans un silencieux d'échappement disposé dans la ligne d'échappement principale (9).
